(19) Europäisches Patentamt

European Patent Office

Office européen des brevets

(11) **EP 4 189 231 B1**

(12) **EUROPEAN PATENT SPECIFICATION**

(45) Date of publication and mention
of the grant of the patent:
**28.08.2024  Bulletin 2024/35**

(21) Application number: **21759395.3**

(22) Date of filing: **29.07.2021**

(51) International Patent Classification (IPC):
**F03B 17/06** *(2006.01)*        **F03B 15/08** *(2006.01)*

(52) Cooperative Patent Classification (CPC):
**F03B 17/063; F03B 15/08;** F05B 2240/12;
F05B 2240/133; F05B 2240/916; F05B 2250/02;
F05B 2270/20; F05B 2270/34; F05B 2270/341;
Y02E 10/20

(86) International application number:
**PCT/IB2021/056933**

(87) International publication number:
**WO 2022/024039 (03.02.2022 Gazette 2022/05)**

(54) **SYSTEM FOR THE REGULATION OF A WATER FLOW PASSING THROUGH A HYDROELECTRIC TURBINE**

SYSTEM ZUR REGELUNG EINES WASSERFLUSSES DURCH EINE HYDROELEKTRISCHE TURBINE

SYSTÈME DE RÉGULATION D'UN FLUX D'EAU TRAVERSANT UNE TURBINE HYDROÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **29.07.2020   IT 202000018451**

(43) Date of publication of application:
**07.06.2023   Bulletin 2023/23**

(73) Proprietor: **COS.B.I. Costruzione Bobine Italia
S.r.l.
29010 Cadeo (PC) (IT)**

(72) Inventors:
• **REBECCHI, Fabio**
  **29010 Cadeo (IT)**
• **REBECCHI, Marco**
  **29010 Cadeo (IT)**

(74) Representative: **ABM Agenzia Brevetti & Marchi
Viale Giovanni Pisano, 31
56123 Pisa (IT)**

(56) References cited:
**WO-A1-2016/152641        WO-A1-2019/059323
WO-A2-2011/095240        DE-U1-202011051930
DE-U1- 202013 100 870**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Field of the invention

The present invention relates to the field of hydroelectric power generation within canals.

In particular, the invention relates to a system for the regulation of a water flow passing through a hydroelectric turbine.

Description of the prior art

As well known, the canals for the flow of water are of the irrigation or energy type. The former are used to distribute water in the cultivated fields and can be gravity-fed or pumped, while the latter are created to feed power plants or to convey water into the natural riverbed, once the jump of the canal has been exploited upstream. Both categories of canal, with the exception of pumped irrigation canals, can be further exploited from the energy point of view by recovering kinetic energy through flowing water turbines.

However, the existing canals are very little exploited from the energy point of view due to a strong variability of level and scope during the year.

In fact, since hydroelectric turbines need to have the blades constantly immersed in the flow and to make the rotor rotate at a speed as constant as possible, the installation of a traditional type turbine inside one of these canals would produce a very variable yield and on average insufficient to justify the running costs.

Furthermore, these canals are designed and sized according to a maximum flow rate which, although present in the canal only for short periods of the year, would in such periods lead to flooding of the canal due to the excess volume of the turbine immersed in the canal and not foreseen in the design phase, entailing significant safety problems, both for the operators and for the canal and the turbine itself.

The document WO2011095240 discloses a hydroelectric power station comprising at least one rotor, a rotor-driven generator, a floating body and a nozzle assembly for increasing the flow rate in the rotor area. In particular, the nozzle assembly has at least one adjustable wall. The purpose of WO2011095240 is to vary the inclination of the adjustable walls so as to keep the flow speed constant in proximity to the rotor and, therefore, to keep the rotation speed of the rotor constant. However, WO2011095240 does not provide any system to control the flow upstream of the turbine in order to prevent flooding or system breakdowns.

Summary of the invention

It is therefore a feature of the present invention to provide a system that allows to suitably regulate the speed of the water flow passing through a hydroelectric turbine, constantly guaranteeing its optimum efficiency.

It is also a feature of the present invention to provide such a system that guarantees the safety of the turbine and of the operators involved, even in the case of maximum flow rate of the water flow.

It is also a feature of the present invention to provide such a system that reduces noise pollution and the environmental aesthetic impact produced by the system.

These and other objects are achieved by a system for the regulation of a water flow passing through a hydroelectric turbine, according to claims from 1 to 14.

Brief description of the drawings

The invention will be now shown with the following description of some embodiments, exemplifying but not limitative, with reference to the attached drawings in which:

- Fig. 1 shows a possible embodiment of the system for the regulation of the water flow applied to a vertical axis turbine;
- Fig. 2 shows the embodiment of Fig. 1 in the flow acceleration configuration;

- Fig. 3 shows a possible embodiment of the system for the regulation of the water flow applied to a horizontal axis turbine;
- Fig. 4 shows the embodiment of Fig. 3 in the flow acceleration configuration;
- Figs. 5A and 5B show a possible embodiment of the release mechanism.

Description of some preferred embodiments

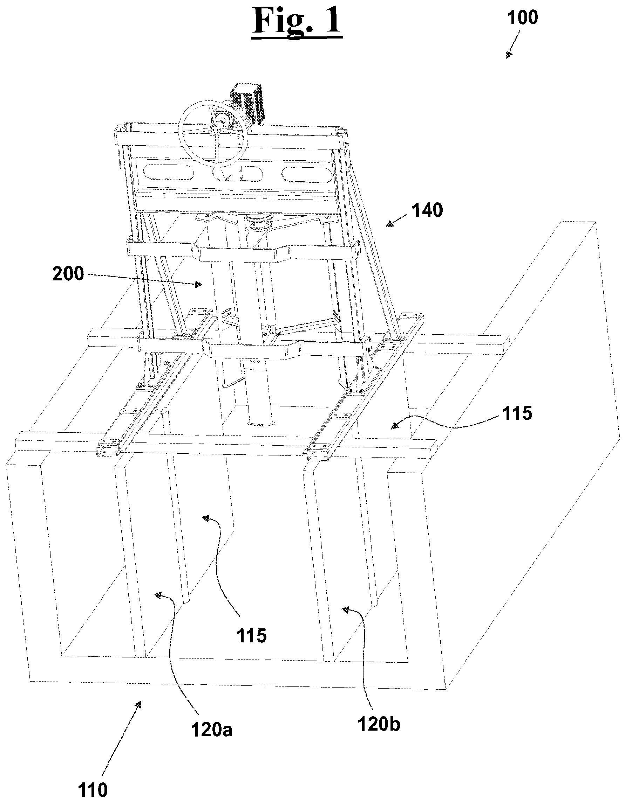

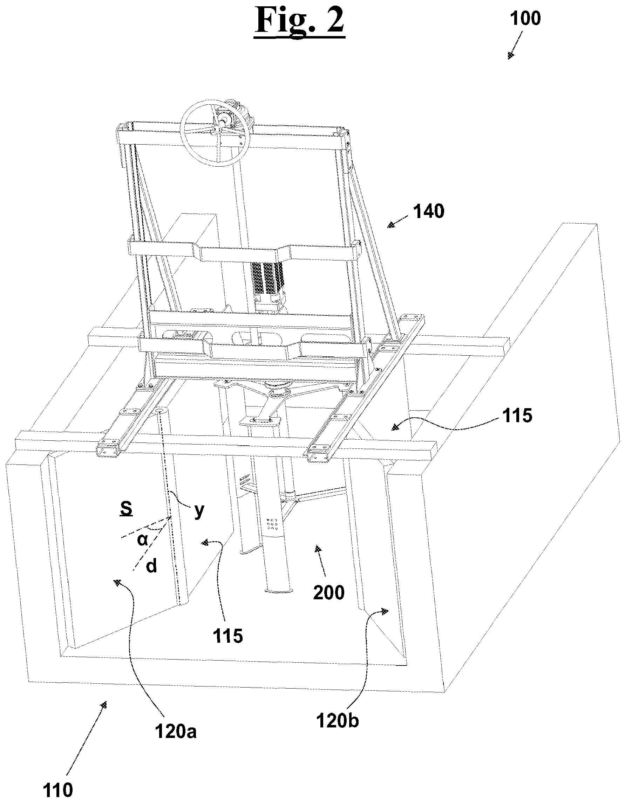

With reference to Figs. 1 and 2, in a first embodiment of the invention, the system 100 comprises a working canal 110 arranged in a water flow having a main sliding direction $d$, a speed $v_u$ upstream of the turbine 200 and upstream of the system 100, a speed $v_t$ at the turbine 200, a speed $v_d$ downstream of the turbine 200 and a height $h_u$ of the free surface upstream of the system 100. The working canal 110 comprises two containing walls 115 and houses inside the hydroelectric turbine 200 itself.

The system 100 then comprises two movable walls 120a,120b located upstream of the hydroelectric turbine 200, each of which defines a planar surface $S$ arranged to form an angle $\alpha$ with respect to the main sliding direction $d$. Furthermore, each movable wall 120a,120b is arranged to rotate about a rotation axis $y$ changing the angle $\alpha$ to switch between a neutral configuration (Fig. 1), wherein $\alpha = 0$ and $v_t \cong v_u$, and a flow acceleration configuration (Fig. 2), wherein $\alpha > 0$ and $v_t > v_u$.

Advantageously, the system 100 comprises at least one sensor configured to measure at least one fluid dynamic parameter of the water flow. In particular, this sensor can be a speed sensor for measuring the value $v_u$ of the speed upstream of the system 100 or a sensor configured to measure one or more parameters $p$ of the flow from which such value $v_u$ can be indirectly derived, such as the flowrate of the water flow. Furthermore, there is at least one sensor, or the same previous sensor, configured to measure the height $h_u$ of the free surface upstream of the system 100. The measurements carried out are sent to the control unit that operates the movable walls 120a,120b for suitably adjusting the speed $v_u$ and the height $h_u$ of the water flow upstream of the system 100.

The present invention therefore allows to receive information regarding the hydrodynamic conditions of the water flow upstream of the system 100 and to modify the inclination of the movable walls 120a, 120b to intervene in the event that the water flow presents an excessive height and/or speed which could be dangerous for the system 100 or for the operators involved.

For example, in case that the height $h_u$ is higher than a predetermined threshold height $h_u^*$ , the control unit is arranged to operate the movable walls 120a,120b, even individually, to arrange them in the neutral configuration, reducing the resistance opposed to the flow and avoiding unwanted increases in the water flow.

In addition, the control unit can operate the movable walls 120a,120b to increase the intensity of the flow at the turbine 200, in the event that the flow rate is not sufficient to produce the desired efficiency.

For example, in case that value $v_u$ is less than a predetermined threshold value $v_u^*$ , the control unit is adapted to operate the movable walls 120a,120b to increase the angle $\alpha$ by arranging them in the flow acceleration configuration.

This way, when the speed $v_u$ upstream of the turbine 200 is too low to make the turbine work at a sufficient speed, the system 100 allows the flow to be conveyed in a sort of converging duct, generating an increase in speed. On the other hand, when the speed $v_u$ is sufficient, the system works in the neutral configuration and the movable walls 120a, 120b are substantially transparent to the water flow, not accelerating it in correspondence with the turbine.

In particular, the control unit is adapted to control the movable walls 120a, 120b to vary the angle $\alpha$ in an inversely proportional manner to the speed value $v_u$. The lower the speed value $v_u$, the greater the flow convergence angle $\alpha$ will be.

In this way, the control unit can adjust the value of the angle $\alpha$ as a function of the speed $v_u$ to keep the speed $v_t$ of the flow inside the turbine substantially constant, guaranteeing, within certain limits, a constant working speed and improving the efficiency of the turbine.

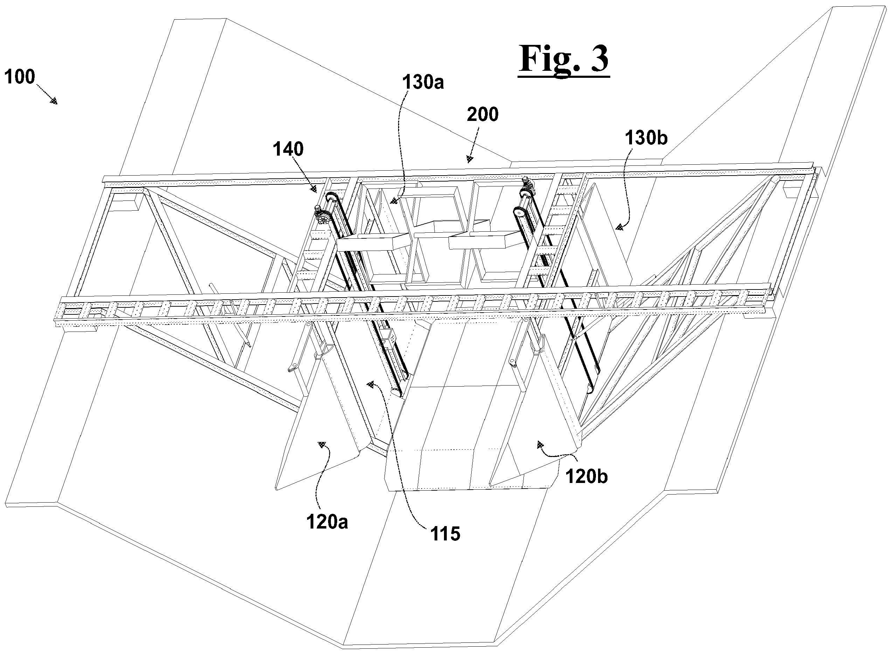

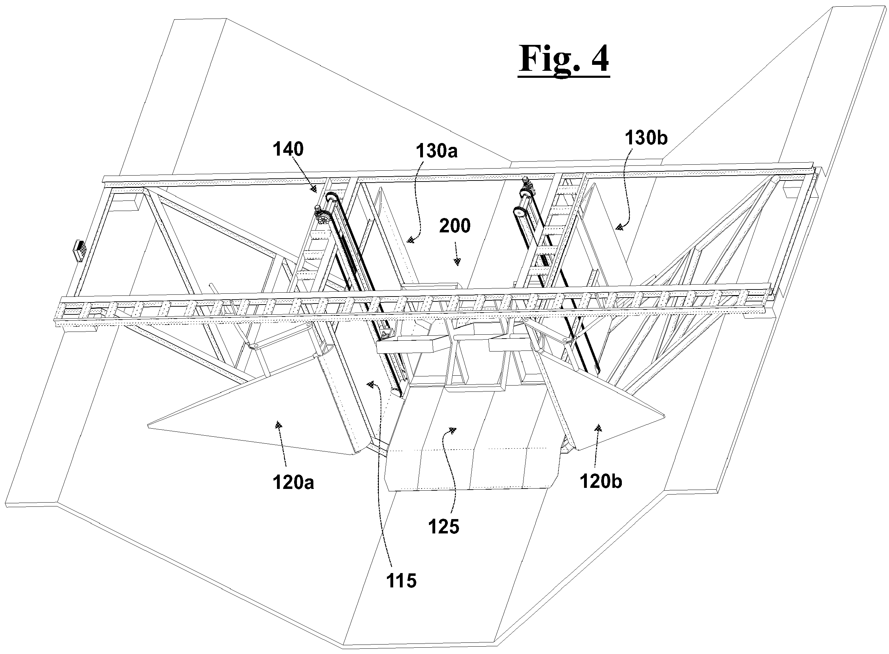

With reference even to Figs. 3 and 4, in a possible embodiment of the invention, the system 100 also comprises two auxiliary movable walls 130a,130b located downstream of the hydroelectric turbine 200 and also configured to switch between a neutral configuration, wherein $v_t \cong v_d$, and at least one flow deceleration configuration, wherein $v_t > v_d$. For graphic simplicity, the auxiliary movable walls 130 are arranged in the neutral configuration in both Figs. 3 and 4.

In a completely analogous manner to the movable walls 120a,120b, each auxiliary movable wall 130a,130b form an angle $\alpha'$ with respect to the main sliding direction $d$ and is adapted to rotate about a rotation axis $y'$ changing the angle $\alpha'$ to switch between the neutral configuration, wherein $\alpha' = 0$, and at least one flow deceleration configuration, wherein $\alpha' > 0$. These geometric parameters are not shown in the figure for graphic simplicity, but are, mutatis mutandis, completely similar to those shown in Fig. 2.

The presence of the auxiliary movable walls 130a,130b reduces the turbulence downstream of the turbine, increasing the efficiency of the turbine's electricity generation process.

In particular, in a possible variant embodiment, the system 100 also comprises a release mechanism arranged to arrange the auxiliary movable walls 130a,130b between a constrained configuration, wherein they are constrained to keep the angle $\alpha'$ constant, and a released configuration, in which they are free to rotate about its rotation axis $y'$ orienting themselves according to the hydrodynamic forces expressed by the water flow.

The release mechanism allows to release the movable wall or the movable walls downstream of the turbine in case of excessive flow rate, so as to allow the movable wall to orient itself according to the hydrodynamic forces expressed by the water flow, guaranteeing the safety of the system.

Furthermore, alternatively or in addition to the release mechanism of the auxiliary movable walls 130a, 130b, the system 100 can provide a further release mechanism adapted to arrange the movable walls 120a,120b between a constrained configuration, in which they are constrained to keep the angle $\alpha$ constant, and a released configuration, in which the movable walls 120a, 120b are arranged in the neutral configuration, reducing the resistance to the water flow.

Both release mechanisms can be operated, for example, in the event that there is a fault in the system 100 and the control unit is unable to control the movable walls 120a,120b and/or the auxiliary movable walls 130a,130b. In this case, the release mechanisms make it possible to reduce the resistance of the walls to the water flow, avoiding dangerous increases in the height and/or speed of the flow itself.

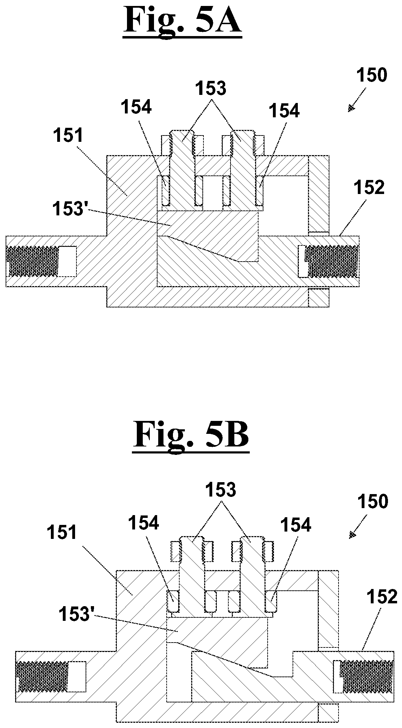

In the figures 5A and 5B a possible embodiment is shown of a release mechanism 150 that can be used in the present invention. In particular, the mechanism comprises a housing 151, a sliding element 153', a wedge 152 and two pins 153. The pins 153 can translate vertically, integrally to the sliding element 153', bringing two springs 154 into compression or expansion. In Fig. 5A, the wedge 152 is not pulled by external forces and remains steadily in its housing. When the wedge 152 is subjected to a pulling action, the pins 153 slide upwards compressing the springs 154. When the pulling action exceeds a predetermined threshold, the wedge is released from the sliding element 153', disengaging from the housing 151, as shown in Fig. 5B.

The release mechanism 150 of Figs. 5A and 5B can be applied both to the movable walls 120a,120b and to the auxiliary movable walls 130a,130b. In this case, when these walls undergo a flow force greater than a certain threshold, in the relative release mechanisms 150 the wedges 151 are released from their respective housings 151, disconnecting the movable walls from the relative actuation systems and leading them to follow the direction of the flow or, alternatively, in the neutral configuration which minimizes the resistance to the flow.

Furthermore, the system 100 may comprise an emergency extraction device. This way, in case that the height $h_u$ reaches a predetermined threshold height $h_u^*$, the emergency extraction device allows removing the hydroelectric turbine 200 by the water flow. Such device is an emergency measure and can be activated, for example, in the event that the variation of the angle of the movable walls is insufficient to keep the flow rate of the water flow below a predetermined threshold and that this could jeopardize the structural integrity of the turbine 200 and/or the safety of the operators involved.

The embodiments shown in Figs. 1 to 4 comprise two movable walls 120a,120b and, optionally, two auxiliary movable walls 130a,130b so as to be able to share the resistance opposed to the water flow, reducing the structural load of each movable wall. However, the present invention also intends to protect embodiments which comprise a single movable wall and/or a single auxiliary movable wall. These solutions may be necessary in case of small dimensions or particular geometry of the canals in which the system 100 is installed. In case of use of a single movable wall and/or a single auxiliary movable wall, the working channel must be placed laterally with respect to the main canal using a side wall of the main canal as a containment wall for the working canal.

With reference to Figs. 1 to 4, the system also provides a lifting device 140 arranged to vary the height of the hydroelectric turbine 200.

The lifting device 140 allows adjust the height of the turbine 200 according to the level of the water flow, keeping it in the optimal position, i.e. completely immersed but close to the surface of the water.

In particular, the sensor configured to measure the height $h_u$ can allow the control unit to command the lifting device to vary the height of the turbine 200 according to the height of the detected water flow.

The fact that the turbine 200 always remains completely immersed in the flow makes it possible to avoid the onset of noise due to the flapping of the blades on the free surface of the water and not to alter the view of the natural state of the canal. At the same time, keeping the turbine 200 at the point as far away as possible from the riverbed ensures to work where the flow velocity is greater, producing greater efficiency.

In addition, the lifting device 140 can allow the extraction of the turbine in the event that the upstream flow is too high, in order to put the turbine in safety and avoid any flooding of the canal.

With reference to Figs. 3 and 4, in one embodiment, the system 100 also provides a lower movable wall 125 arranged on the bottom at said working canal 110.

In particular, the lower movable wall 125 may have an inclined geometry upwards at the turbine entrance and downwards at the turbine exit, to increase the convergent-divergent duct effect.

Furthermore, the lower movable wall 125 can incline allowing to further increase the speed of the flow entering the turbine 200.

In particular, at least one electrical energy accumulator is provided which is suitable for activating the movable walls and/or the auxiliary movable walls in the event of a power failure on the system network.

The foregoing description embodiments of the invention will so fully reveal the invention according to the conceptual point of view, so that others, by applying current knowledge, will be able to modify and/or adapt for various applications such embodiment without further research and without parting from the invention, and, accordingly, it is therefore to be understood that such adaptations and modifications will have to be considered as equivalent to the specific embodiments. The means and the materials to realise the different functions described herein could have a different nature without, for this reason, departing from the field of the invention. It is to be understood that the phraseology or terminology that is employed herein is for the purpose of description and not of limitation.

**Claims**

1. A system (100) for the regulation of a water flow passing through a hydroelectric turbine (200), said water flow having:

   - a main sliding direction $d$;
   - a speed $v_u$ upstream of said system (100);
   - a speed $v_t$ at said hydroelectric turbine (200);
   - a speed $v_d$ downstream of said hydroelectric turbine (200);
   - a height $h_u$ of the free surface upstream of said system (100);

   said system (100) comprising:

   - a working canal (110) placed in said water flow and comprising at least one side wall (115), said working canal (110) arranged, in use, to house said hydroelectric turbine (200);

- at least one movable wall (120a,120b) located upstream of said hydroelectric turbine (200) and configured to switch between a neutral configuration, wherein $v_t \cong v_u$, and at least one flow acceleration configuration, wherein $v_t > v_u$;

said system (100) **characterized in that** it comprises furthermore:

- at least one sensor arranged to measure:

- said speed $v_u$ or a parameter $p$ from which it is possible to calculate said speed $v_u$;
- said height $h_u$;

- a control unit arranged to:

- receive said speed $v_u$ or said parameter $p$ and said height $h_u$;
- operate said or each movable wall (120a,120b) switching between said neutral configuration and said flow acceleration configuration in order to suitably vary said speed $v_u$ and said height $h_u$.

2. The system (100) for the regulation of a water flow passing through a hydroelectric turbine (200), according to claim 1, wherein in case that said speed $v_u$ is less than a predetermined threshold speed $v_u^*$, said control unit is arranged to operate said or each movable wall (120a,120b) for arranging it in said flow acceleration configuration.

3. The system (100) for the regulation of a water flow passing through a hydroelectric turbine (200), according to claim 1, wherein in case that said height $h_u$ is higher than a predetermined threshold height $h_u^*$, said control unit is arranged to operate said or each movable wall (120a,120b) for arranging it in said neutral configuration.

4. The system (100) for the regulation of a water flow passing through a hydroelectric turbine (200), according to claim 1, wherein said or each movable wall (120a,120b) comprises a planar surface $S$ arranged to form an angle $\alpha$ with respect to said main sliding direction $d$, said or each movable wall (120a,120b) arranged to rotate about a rotation axis $y$ changing said angle $\alpha$ to switch between said neutral configuration, wherein $\alpha = 0$, and at least one flow acceleration configuration, wherein $\alpha > 0$.

5. The system (100) for the regulation of a water flow passing through a hydroelectric turbine (200), according to claim 4, wherein said control unit is arranged to operate said or each movable wall (120a,120b) for adjusting said angle $\alpha$ in a way inversely proportional to said speed $v_u$.

6. The system (100) for the regulation of a water flow passing through a hydroelectric turbine (200), according to claim 4, wherein a release mechanism is provided arranged to arrange said or each movable wall (120a,120b) between a constrained configuration, wherein said or each movable wall (120a,120b) is constrained to keep said angle $\alpha$ constant, and a released configuration, in which said or each movable wall (120a,120b) switches to said neutral configuration.

7. The system (100) for the regulation of a water flow passing through a hydroelectric turbine (200), according to any of the previous claims, wherein at least one auxiliary movable wall (130a,130b) is also provided located downstream of said hydroelectric turbine (200) and configured to switch between a neutral configuration, wherein $v_t \cong v_d$, and at least one flow deceleration configuration, wherein $v_t > v_d$.

8. The system (100) for the regulation of a water flow passing through a hydroelectric turbine (200), according to claim 7, wherein said or each auxiliary movable wall (130a,130b) comprises a planar surface $S'$ arranged to form an angle $\alpha'$ with respect to said main sliding direction $d$, said or each auxiliary movable wall (130a,130b) arranged to rotate about a rotation axis $y'$ changing said angle $\alpha'$ to switch between said neutral configuration, wherein $\alpha' = 0$, and at least one flow deceleration configuration, wherein $\alpha' > 0$.

9. The system (100) for the regulation of a water flow passing through a hydroelectric turbine (200), according to claim 8, wherein a release mechanism is provided arranged to arrange said or each auxiliary movable wall (130a,130b) between a constrained configuration, wherein said or each auxiliary movable wall (130a,130b) is constrained to keep said angle $\alpha'$ constant, and a released configuration, in which said or each auxiliary movable wall (130a,130b) is free to rotate about said rotation axis $y'$ orienting itself according to the hydrodynamic forces expressed by said water flow.

10. The system (100) for the regulation of a water flow passing through a hydroelectric turbine (200), according to any of the previous claims, wherein at least two movable walls (120a,120b) are provided arranged symmetrically with respect to said working canal (110).

**11.** The system (100) for the regulation of a water flow passing through a hydroelectric turbine (200), according to any of claims from 7 to 9, wherein at least two auxiliary movable walls (130a,130b) are provided arranged symmetrically with respect to said working canal (110).

**12.** The system (100) for the regulation of a water flow passing through a hydroelectric turbine (200), according to any of the previous claims, wherein a lifting device (140) is provided arranged to adjust the height of said hydroelectric turbine (200).

**13.** The system (100) for the regulation of a water flow passing through a hydroelectric turbine (200), according to any of the previous claims, wherein a lower movable wall (125) is provided arranged on the bottom at said working canal (110).

**14.** The system (100) for the regulation of a water flow passing through a hydroelectric turbine (200), according to any of the previous claims, wherein an emergency extraction device is provided and wherein, in case that said height $h_u$ is higher than a predetermined threshold height $h^*_u$, said emergency extraction device is arranged to remove said hydroelectric turbine (200) from said water flow.

**Patentansprüche**

**1.** System (100) zur Regulierung eines Wasserflusses durch eine hydroelektrische Turbine (200), wobei der Wasserfluss Folgendes aufweist:

- eine Hauptgleitrichtung $d$;
- eine Geschwindigkeit $v_u$ stromaufwärts des Systems (100);
- eine Geschwindigkeit $v_t$ an der hydroelektrischen Turbine (200);
- eine Geschwindigkeit $v_d$ stromabwärts der hydroelektrischen Turbine (200),
- eine Höhe $h_u$ der freien Oberfläche stromaufwärts des Systems (100);

wobei das System (100) Folgendes umfasst:

- einen Arbeitskanal (110), der in dem Wasserfluss platziert ist und mindestens eine Seitenwand (115) umfasst, wobei der Arbeitskanal (110) in Verwendung dazu angeordnet ist, die hydroelektrische Turbine (200) unterzubringen;
- mindestens eine bewegbare Wand (120a, 120b), die stromaufwärts der hydroelektrischen Turbine (200) gelegen und dazu konfiguriert ist, zwischen einer neutralen Konfiguration, in der $v_t \cong v_u$, und mindestens einer Flussbeschleuni-

gungskonfiguration, in der $vt > v_u$, umzuschalten;

wobei das System (100) **dadurch gekennzeichnet ist, dass** es außerdem Folgendes umfasst:

- mindestens einen Sensor, der dazu angeordnet ist, Folgendes zu messen:

  - die Geschwindigkeit $v_u$ oder einen Parameter $p$, aus dem es möglich ist, die Geschwindigkeit $v_u$ zu berechnen;
  - die Höhe $h_u$;

- eine Steuereinheit, die zu Folgendem angeordnet ist:

  - Empfangen der Geschwindigkeit $v_u$ oder des Parameters $p$ und der Höhe $h_u$;
  - Betreiben der oder jeder bewegbaren Wand (120a, 120b), was zwischen der neutralen Konfiguration und der Flussbeschleunigungskonfiguration umschaltet, um die Geschwindigkeit $v_u$ und die Höhe $h_u$ geeignet zu variieren.

**2.** System (100) zur Regulierung eines Wasserflusses durch eine hydroelektrische Turbine (200) nach Anspruch 1, wobei in dem Fall, dass die Geschwindigkeit $v_u$ geringer als eine vorbestimmte Schwellengeschwindigkeit $v^*_u$ ist, die Steuereinheit dazu angeordnet ist, die oder jede bewegbare Wand (120a, 120b) zu betreiben, um sie in der Flussbeschleunigungskonfiguration anzuordnen.

**3.** System (100) zur Regulierung eines Wasserflusses durch eine hydroelektrische Turbine (200) nach Anspruch 1, wobei in dem Fall, dass die Höhe $h_u$ höher als eine vorbestimmte Schwellenhöhe $h^*_u$ ist, die Steuereinheit dazu angeordnet ist, die oder jede bewegbare Wand (120a, 120b) zu betreiben, um sie in der neutralen Konfiguration anzuordnen.

**4.** System (100) zur Regulierung eines Wasserflusses durch eine hydroelektrische Turbine (200) nach Anspruch 1, wobei die oder jede bewegbare Wand (120a, 120b) eine ebene Oberfläche S umfasst, die dazu angeordnet ist, einen Winkel $\alpha$ in Bezug auf die Hauptgleitrichtung $d$ zu bilden, wobei die oder jede bewegbare Wand (120a, 120b) dazu angeordnet ist, sich um eine Drehachse $y$ zu drehen, was den Winkel $\alpha$ ändert, um zwischen der neutralen Konfiguration, in der $\alpha = 0$, und mindestens einer Flussbeschleunigungskonfiguration, in der $\alpha > 0$, umzuschalten.

**5.** System (100) zur Regulierung eines Wasserflusses durch eine hydroelektrische Turbine (200) nach Anspruch 4, wobei die Steuereinheit dazu angeordnet ist, die oder jede bewegbare Wand (120a, 120b) zu betreiben, um den Winkel $\alpha$ auf eine Weise einzustellen, die umgekehrt proportional zu der Geschwindigkeit $v_u$ ist.

**6.** System (100) zur Regulierung eines Wasserflusses durch eine hydroelektrische Turbine (200) nach Anspruch 4, wobei ein Freigabemechanismus bereitgestellt ist, der dazu angeordnet ist, die oder jede bewegbare Wand (120a, 120b) zwischen einer eingeschränkten Konfiguration, in der die oder jede bewegbare Wand (120a, 120b) eingeschränkt ist, um den Winkel $\alpha$ konstant zu halten, und einer freigegebenen Konfiguration, in der die oder jede bewegbare Wand (120a, 120b) in die neutrale Konfiguration umschaltet, anzuordnen.

**7.** System (100) zur Regulierung eines Wasserflusses durch eine hydroelektrische Turbine (200) nach einem der vorhergehenden Ansprüche, wobei mindestens eine bewegbare Hilfswand (130a, 130b) ebenfalls bereitgestellt ist, die stromabwärts der hydroelektrischen Turbine (200) gelegen und dazu konfiguriert ist, zwischen einer neutralen Konfiguration, in der $v_t = v_d$, und mindestens einer Flussverlangsamungskonfiguration, in der $vt > v_d$, umzuschalten.

**8.** System (100) zur Regulierung eines Wasserflusses durch eine hydroelektrische Turbine (200) nach Anspruch 7, wobei die oder jede bewegbare Hilfswand (130a, 130b) eine ebene Oberfläche $S'$ umfasst, die dazu angeordnet ist, einen Winkel $\alpha'$ in Bezug auf die Hauptgleitrichtung $d$ zu bilden, wobei die oder jede bewegbare Hilfswand (130a, 130b) dazu angeordnet ist, sich um eine Drehachse $y'$ zu drehen, was den Winkel $\alpha'$ ändert, um zwischen der neutralen Konfiguration, in der $\alpha' = 0$, und mindestens einer Flussverlangsamungskonfiguration, in der $\alpha' > 0$, umzuschalten.

**9.** System (100) zur Regulierung eines Wasserflusses durch eine hydroelektrische Turbine (200) nach Anspruch 8, wobei ein Freigabemechanismus bereitgestellt ist, der dazu angeordnet ist, die oder jede bewegbare Hilfswand (130a, 130b) zwischen einer eingeschränkten Konfiguration, in der die oder jede bewegbare Hilfswand (130a, 130b) eingeschränkt ist, um den Winkel $\alpha'$ konstant zu halten, und einer freigegebenen Konfiguration, in der die oder jede bewegbare Hilfswand (130a, 130b) sich frei um die Drehachse $y'$ drehen kann, was sie selbst gemäß den durch den Wasserfluss ausgeübten hydrodynamischen Kräften ausrichtet, anzuordnen.

**10.** System (100) zur Regulierung eines Wasserflusses durch eine hydroelektrische Turbine (200) nach einem der vorhergehenden Ansprüche, wobei mindestens zwei bewegbare Wände (120a, 120b) bereitgestellt sind, die symmetrisch in Bezug auf den Arbeitskanal (110) angeordnet sind.

**11.** System (100) zur Regulierung eines Wasserflusses durch eine hydroelektrische Turbine (200) nach einem der Ansprüche 7 bis 9, wobei mindestens zwei bewegbare Hilfswände (130a, 130b) bereitgestellt sind, die symmetrisch in Bezug auf den Arbeitskanal (110) angeordnet sind.

**12.** System (100) zur Regulierung eines Wasserflusses durch eine hydroelektrische Turbine (200) nach einem der vorhergehenden Ansprüche, wobei eine Hebevorrichtung (140) bereitgestellt ist, die dazu angeordnet ist, die Höhe der hydroelektrischen Turbine (200) einzustellen.

**13.** System (100) zur Regulierung eines Wasserflusses durch eine hydroelektrische Turbine (200) nach einem der vorhergehenden Ansprüche, wobei eine untere bewegbare Wand (125) bereitgestellt ist, die am Boden an dem Arbeitskanal (110) angeordnet ist.

**14.** System (100) zur Regulierung eines Wasserflusses durch eine hydroelektrische Turbine (200) nach einem der vorhergehenden Ansprüche, wobei eine Notextraktionsvorrichtung bereitgestellt ist und wobei in dem Fall, dass die Höhe $h_u$ höher als eine vorbestimmte Schwellenhöhe $h_u^*$ ist, die Notextraktionsvorrichtung dazu angeordnet ist, die hydroelektrische Turbine (200) aus dem Wasserfluss zu entfernen.

**Revendications**

**1.** Système (100) permettant la régulation d'un flux d'eau traversant une turbine hydroélectrique (200), ledit flux d'eau comportant :

   - une direction principale de glissement $d$ ;
   - une vitesse $v_u$ en amont dudit système (100) ;
   - une vitesse $v_t$ au niveau de ladite turbine hydroélectrique (200) ;
   - une vitesse $v_d$ en aval de ladite turbine hydroélectrique (200) ;
   - une hauteur $h_u$ de la surface libre en amont dudit système (100) ;

   ledit système (100) comprenant :

   - un canal de travail (110) placé dans ledit flux d'eau et comprenant au moins une paroi latérale (115), ledit canal de travail (110) étant agencé, en utilisation, pour loger ladite turbine hydroélectrique (200) ;
- au moins une paroi mobile (120a, 120b) située en amont de ladite turbine hydroélectrique (200) et configurée pour basculer entre une configuration neutre, dans laquelle $vt = v_u$, et au moins une configuration d'accélération de flux, dans laquelle $v_t > v_u$ ;

ledit système (100) **caractérisé en ce qu'**il comprend, en outre :

- au moins un capteur agencé pour mesurer :

- ladite vitesse $v_u$ ou un paramètre $p$ à partir duquel il est possible de calculer ladite vitesse $v_u$ ;
- ladite hauteur $h_u$ ;

- une unité de commande agencée pour :

- recevoir ladite vitesse $v_u$ ou ledit paramètre $p$ et ladite hauteur $h_u$ ;
- actionner ladite ou chaque paroi mobile (120a, 120b) en la faisant basculer entre ladite configuration neutre et ladite configuration d'accélération du flux afin de faire varier de manière appropriée ladite vitesse $v_u$ et ladite hauteur $h_u$.

2. Système (100) permettant la régulation d'un flux d'eau traversant une turbine hydroélectrique (200), selon la revendication 1, dans lequel dans le cas où ladite vitesse $v_u$ est inférieure à une vitesse seuil prédéterminée $v_u^*$, ladite unité de commande est agencée pour actionner ladite ou chaque paroi mobile (120a, 120b) pour l'agencer dans ladite configuration d'accélération du flux.

3. Système (100) permettant la régulation d'un flux d'eau traversant une turbine hydroélectrique (200), selon la revendication 1, dans lequel dans le cas où ladite hauteur $h_u$ est supérieure à une hauteur seuil prédéterminée $h_u^*$, ladite unité de commande est agencée pour actionner ladite ou chaque paroi mobile (120a, 120b) pour l'agencer dans ladite configuration neutre.

4. Système (100) permettant la régulation d'un flux d'eau traversant une turbine hydroélectrique (200), selon la revendication 1, dans lequel ladite ou chaque paroi mobile (120a, 120b) comprend une surface plane $S$ agencée pour former un angle $a$ par rapport à ladite direction principale de coulissement $d$, ladite ou chaque paroi mobile (120a, 120b) agencée pour tourner autour d'un axe de rotation $y$ modifiant ledit angle $a$ pour basculer entre ladite configuration neutre, dans laquelle $a = 0$, et au moins une configuration d'accélération de flux, dans laquelle $a > 0$.

5. Système (100) permettant la régulation d'un flux d'eau traversant une turbine hydroélectrique (200), selon la revendication 4, dans lequel ladite unité de commande est agencée pour actionner ladite ou chaque paroi mobile (120a, 120b) pour ajuster ledit angle $a$ d'une manière inversement proportionnelle à ladite vitesse $v_u$.

6. Système (100) permettant la régulation d'un flux d'eau traversant une turbine hydroélectrique (200), selon la revendication 4, dans lequel un mécanisme de libération est prévu agencé pour agencer ladite ou chaque paroi mobile (120a, 120b) entre une configuration contrainte, dans laquelle ladite ou chaque paroi mobile (120a, 120b) est contrainte de maintenir ledit angle $a$ constant, et une configuration libérée, dans laquelle ladite ou chaque paroi mobile (120a, 120b) bascule vers ladite configuration neutre.

7. Système (100) permettant la régulation d'un flux d'eau traversant une turbine hydroélectrique (200), selon l'une quelconque des revendications précédentes, dans lequel au moins une paroi mobile auxiliaire (130a, 130b) est également prévue située en aval de ladite turbine hydroélectrique (200) et configurée pour basculer entre une configuration neutre, dans laquelle $v_t \cong v_d$, et au moins une configuration de décélération de flux, dans laquelle $v_t > v_d$.

8. Système (100) permettant la régulation d'un flux d'eau traversant une turbine hydroélectrique (200), selon la revendication 7, dans lequel ladite ou chaque paroi mobile auxiliaire (130a, 130b) comprend une surface plane $S'$ agencée pour former un angle $a'$ par rapport à ladite direction de coulissement principale $d$, ladite ou chaque paroi mobile auxiliaire (130a, 130b) agencée pour tourner autour d'un axe de rotation $y'$ modifiant ledit angle $a'$ pour basculer entre ladite configuration neutre, dans laquelle $a' = 0$, et au moins une configuration de décélération de flux, dans laquelle $a' > 0$.

9. Système (100) permettant la régulation d'un flux d'eau traversant une turbine hydroélectrique (200), selon la revendication 8, dans lequel un mécanisme de libération est prévu, agencé pour agencer ladite ou chaque paroi mobile auxiliaire (130a, 130b) entre une configuration contrainte, dans laquelle ladite ou chaque paroi mobile auxiliaire (130a, 130b) est contrainte de maintenir ledit angle $a'$ constant, et une configuration libérée, dans laquelle ladite ou chaque paroi mobile auxiliaire (130a, 130b) est libre de tourner autour dudit axe de rotation $y'$ en s'orientant d'elle-même en fonction des forces hydrodynamiques exprimées par ledit écoulement d'eau.

**10.** Système (100) permettant la régulation d'un flux d'eau traversant une turbine hydroélectrique (200), selon l'une quelconque des revendications précédentes, dans lequel au moins deux parois mobiles (120a, 120b) sont prévues agencées symétriquement par rapport audit canal de travail (110).

**11.** Système (100) permettant la régulation d'un flux d'eau traversant une turbine hydroélectrique (200), selon l'une quelconque des revendications 7 à 9, dans lequel au moins deux parois mobiles auxiliaires (130a, 130b) sont prévues agencées symétriquement par rapport audit canal de travail (110).

**12.** Système (100) permettant la régulation d'un flux d'eau traversant une turbine hydroélectrique (200), selon l'une quelconque des revendications précédentes, dans lequel un dispositif de levage (140) est prévu agencé pour ajuster la hauteur de ladite turbine hydroélectrique (200).

**13.** Système (100) permettant la régulation d'un flux d'eau traversant une turbine hydroélectrique (200), selon l'une quelconque des revendications précédentes, dans lequel une paroi mobile inférieure (125) est prévue agencée au fond dudit canal de travail (110).

**14.** Système (100) permettant la régulation d'un flux d'eau traversant une turbine hydroélectrique (200), selon l'une quelconque des revendications précédentes, dans lequel un dispositif d'extraction d'urgence est prévu et dans lequel, dans le cas où ladite hauteur $h_u$ est supérieure à une hauteur seuil prédéterminée $h^*_u$, ledit dispositif d'extraction d'urgence est agencé pour retirer ladite turbine hydroélectrique (200) dudit flux d'eau.

# Fig. 1

100

140

200

115

115

120a

120b

110

# Fig. 2

100

140

115

S  y
α
d

115

200

120a

120b

110

Fig. 3

Fig. 4

130b

130a

200

140

120b

125

115

120a

# Fig. 5A

# Fig. 5B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011095240 A